(19) Europäisches Patentamt / European Patent Office / Office européen des brevets

(11) **EP 2 693 670 A1**

(12) **EUROPEAN PATENT APPLICATION**
published in accordance with Art. 153(4) EPC

(43) Date of publication:
**05.02.2014 Bulletin 2014/06**

(51) Int Cl.:
***H04J 11/00*** *(2006.01)*     ***H04N 7/173*** *(2011.01)*

(21) Application number: **12765485.3**

(22) Date of filing: **23.03.2012**

(86) International application number:
**PCT/JP2012/057529**

(87) International publication number:
**WO 2012/133194 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011078873**

(71) Applicant: **Sony Corporation**
**Tokyo 108-0075 (JP)**

(72) Inventors:
• **YOKOKAWA Takashi**
  **Tokyo 108-0075 (JP)**

• **YOSHIMOCHI Naoki**
  **Tokyo 108-0075 (JP)**
• **SAKAI Hitoshi**
  **Yokohama-shi**
  **Kanagawa 240-0005 (JP)**

(74) Representative: **Körber, Martin Hans**
  **Mitscherlich & Partner**
  **Patent- und Rechtsanwälte**
  **Sonnenstrasse 33**
  **80331 München (DE)**

(54) **RECEIVER APPARATUS, RECEPTION METHOD, PROGRAM, AND RECEPTION SYSTEM**

(57) The present technique relates to a reception apparatus, a reception method, a program, and a reception system capable of starting decoding of data in a short time. A reception apparatus according to an aspect of the present technique includes a demodulation unit configured to demodulate a modulated signal used to transmit transmission control information about data and the data to be transmitted, a first decoding unit configured to decode the transmission control information obtained by demodulation performed with the demodulation unit, a storage unit configured to store the data obtained by demodulation performed with the demodulation unit, and a second decoding unit configured to decode the data stored in the storage unit on the basis of the transmission control information decoded by the first decoding unit. The present technique can be applied to a receiver receiving an OFDM signal of DVB-C2.

*FIG. 4*

**Description**

TECHNICAL FIELD

The present technique particularly relates to a reception apparatus, a reception method, a program, and a reception system capable of starting decoding of data in a short time.

BACKGROUND ART

[DVB-C2]

There is a DVB-C2 as the European second-generation cable digital broadcasting standard (Non-Patent Document 1). In DVB-C2, a frame called C2 frame is defined, and data are transmitted in units of C2 frames.

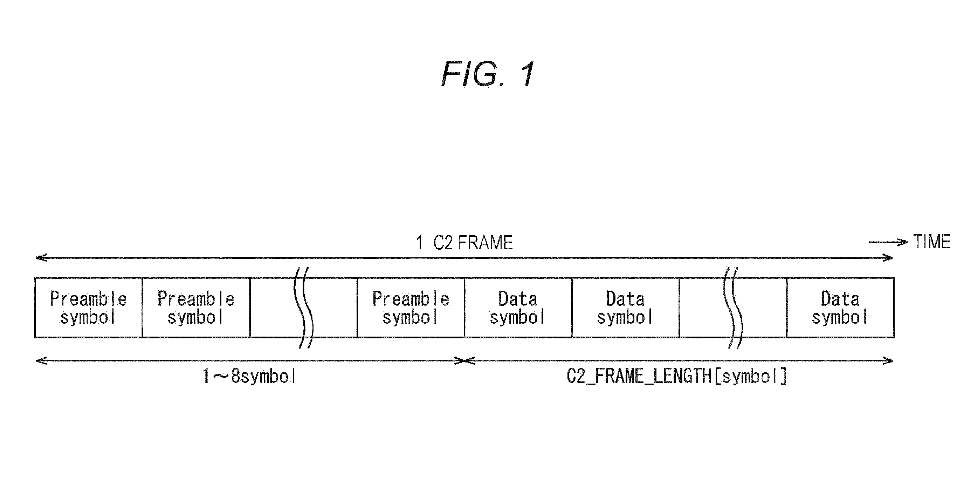

Fig. 1 is a figure illustrating a frame structure of C2 frame. The horizontal direction of Fig. 1 denotes a time.
A C2 frame includes one to eight Preamble Symbols which are OFDM (Orthogonal Frequency Division Multiplexing) symbols and a predetermined number of Data Symbols. The Preamble Symbols are arranged at the front of the C2 frame, and Data Symbols are arranged after the Preamble Symbols.
The Preamble Symbol is a symbol used to transmit transmission control information called L1 signalling part 2 data (L1 information). The Data Symbol is a symbol used to transmit TS (Transport Stream) and the like such as program data. The Data Symbols are divided for each Data Slice.
The reception processing in the receiver is done to receive a signal in a Tuning Window having a fixed band width of 3408 carriers. The central position (central frequency) of the Tuning Window suitable for reception of the signal of the desired Data Slice is designated by the  transmission side by the L1 information.
The receiver performs demodulation processing including processing such as quadrature demodulation and equalization of the received OFDM signal, and performs decoding processing such as LDPC decoding and BCH decoding on the signal obtained by the demodulation processing. On the basis of the L1 information obtained by the decoding processing, the data transmitted with the Data Symbols are decoded. For example, after the OFDM demodulation, the data transmitted with the Data Symbols are de-interleaved, but the pattern of de-interleaving is difference in accordance with the information included in the L1 information.
As described above, in order to decode the data transmitted with the Data Symbols, it is necessary to decode and obtain the L1 information transmitted with the Preamble Symbols before decoding the data transmitted with the Data Symbols. Hereinafter, the data transmitted with the Data Symbols will be referred to as main line data as necessary.

CITATION LIST

NON-PATENT DOCUMENT

Non-Patent Document 1: DVB-C2 specification [Digital Video Broadcasting (DVB); Frame structure channel coding and modulation for a second generation digital transmission system for cable systems (DVB-C2)] DVB Document A138
Non-Patent Document 2: DVB-C2 implementation guidelines [Digital Video Broadcasting (DVB); Implementation Guidelines for a second generation digital cable transmission system (DVB-C2)] ETSI TS 102 991 v1.1.2

SUMMARY OF THE INVENTION

PROBLEMS TO BE SOLVED BY THE INVENTION

[Decoding sequence]

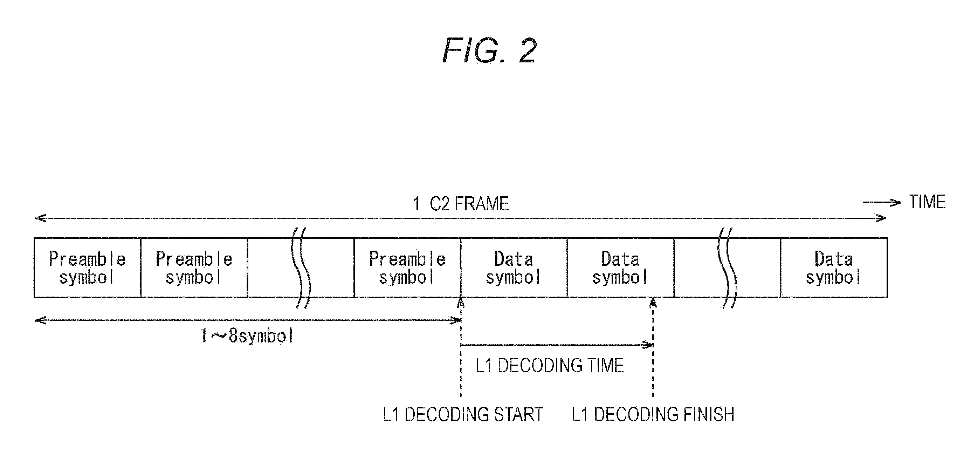

Fig. 2 is a figure illustrating an example of a sequence up to start of decoding of main line data. The horizontal direction of Fig. 2 denotes a time.
As illustrated in Fig. 2, the Preamble Symbols are demodulated in accordance with its order, and the demodulation of the final Preamble Symbol is finished, decoding of the L1  information obtained by demodulation is started. Even between the start of decoding and the end of decoding of the L1 information, the demodulation unit performing the demodulation processing outputs main line data obtained by the demodulation of the Data Symbols to the decoding unit performing the decoding processing.

As described above, the L1 information is required for the decoding of the main line data transmitted with the Data Symbols. The main line data that are output from the demodulation unit between the start of decoding and the end of decoding of the L1 information cannot be decoded by the decoding unit.

For this reason, according to a method described in the DVB-C2 implementation guidelines, it is necessary to wait to decode the main line data until obtaining the Data Symbols of the C2 frame subsequent to the C2 frame used for obtaining the L1 information (Non-Patent Document 2). As illustrated in Fig. 3, when the L1 information is obtained from the first C2 frame, the decoding can be started from the main line data transmitted with the first Data Symbols as illustrated with shading as soon as the first Data Symbol in the second frame is obtained.

However, according to this method, there is a delay equivalent to a C2 frame period from when the decoding of the L1 information is finished to when the decoding of the main line data is started.

The L1 information is not fixed and may be changed, but according to this method, what can be decoded using new L1 information is the main line data transmitted with the Data Symbols in the subsequent C2 frame, and therefore, it is impossible to seamlessly follow the change of the L1 information. When the not-yet-changed L1 information is already obtained from the predetermined C2 frame, and the L1 information is changed in the current C2 frame, then the decoding of the main line data transmitted with the Data Symbols in the current C2 frame is done on the basis of the not-yet-changed L1 information.

The present technique is made in view of such circumstances, and is to quickly start decoding of data.

SOLUTIONS TO PROBLEMS

A reception apparatus according to an aspect of the present technique includes a demodulation unit configured to demodulate a modulated signal used to transmit transmission control information about data and the data to be transmitted, a first decoding unit configured to decode the transmission control information obtained by demodulation performed with the demodulation unit, a storage unit configured to store the data obtained by demodulation performed with the demodulation unit, and a second decoding unit configured to decode the data stored in the storage unit on the basis of the transmission control information decoded by the first decoding unit.

The reception apparatus may be an IC chip, a component including an IC chip, or an apparatus constituted by a component including an IC chip. The storage unit may be a volatile storage unit or a non-volatile storage unit.

The modulated signal may include a signal used for transmitting the transmission control information and a signal used for transmitting the data, which are arranged in an order of transmission. In this case, the storage unit can store the data obtained while the transmission control information is being decoded.

When the first decoding unit finishes decoding of the transmission control information, the second decoding unit can start decoding the data.

The modulated signal is an OFDM signal of DVB-C2, the transmission control information is L1 information transmitted with a Preamble Symbol, and the data are data transmitted with a Data Symbol.

According to an aspect of the present technique, a modulated signal used to transmit transmission control information about data and the data to be transmitted are demodulated, and the transmission control information obtained by demodulation is decoded. The data obtained by demodulation are stored, and the stored data are decoded on the basis of the transmission control information decoded.

EFFECTS OF THE INVENTION

According to the present technique, the decoding of the data can be started quickly.

BRIEF DESCRIPTION OF DRAWINGS

Fig. 1 is a figure illustrating a frame structure of C2 frame.
Fig. 2 is a figure illustrating a sequence for starting decoding of the main line data.
Fig. 3 is another figure illustrating a sequence for starting decoding of the main line data.
Fig. 4 is a figure illustrating an example of a decoding sequence of a reception apparatus according to an embodiment of the present technique.
Fig. 5 is a figure illustrating change of the L1 information.
Fig. 6 is a block diagram illustrating an example of configuration of a reception apparatus.
Fig. 7 is a figure illustrating parameters of L1 information.
Fig. 8 is a block diagram illustrating an example of configuration of a main line decoding unit.
Fig. 9 is a figure illustrating an example of extraction of Data Slice.

Fig. 10 is a flowchart for explaining operation of the reception apparatus.
Fig. 11 is a block diagram illustrating an example of configuration of a reception system.
Fig. 12 is a block diagram illustrating an example of configuration of hardware of a computer.

MODE FOR CARRYING OUT THE INVENTION

Hereinafter, en embodiment for carrying out the present technique will be explained. It should be noted that the explanation will be made in the following order.

   1. Decoding sequence
   2. Configuration and operation of reception apparatus
   3. Modification

<Decoding sequence>

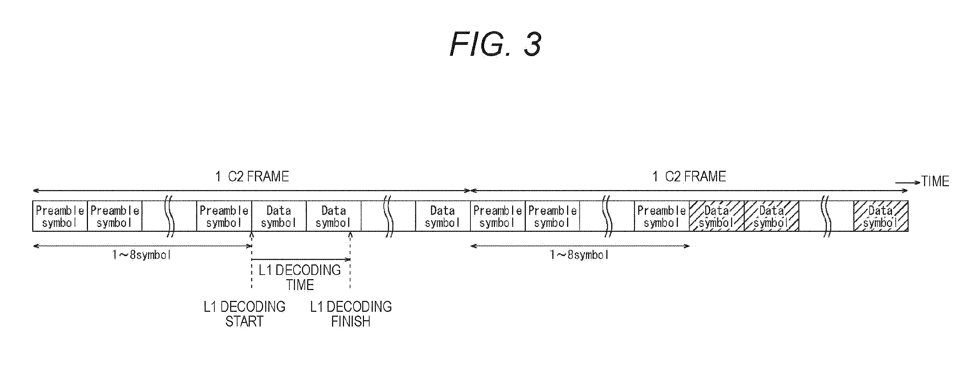

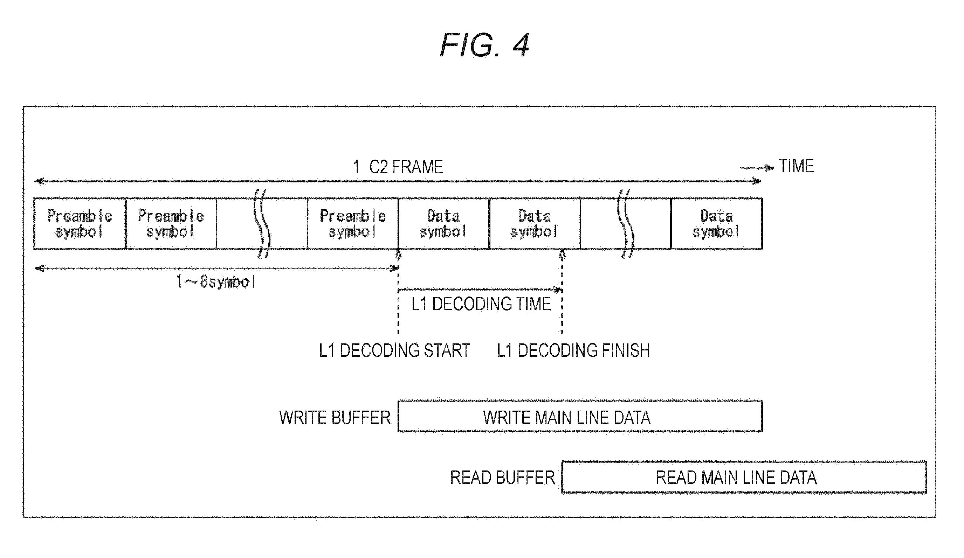

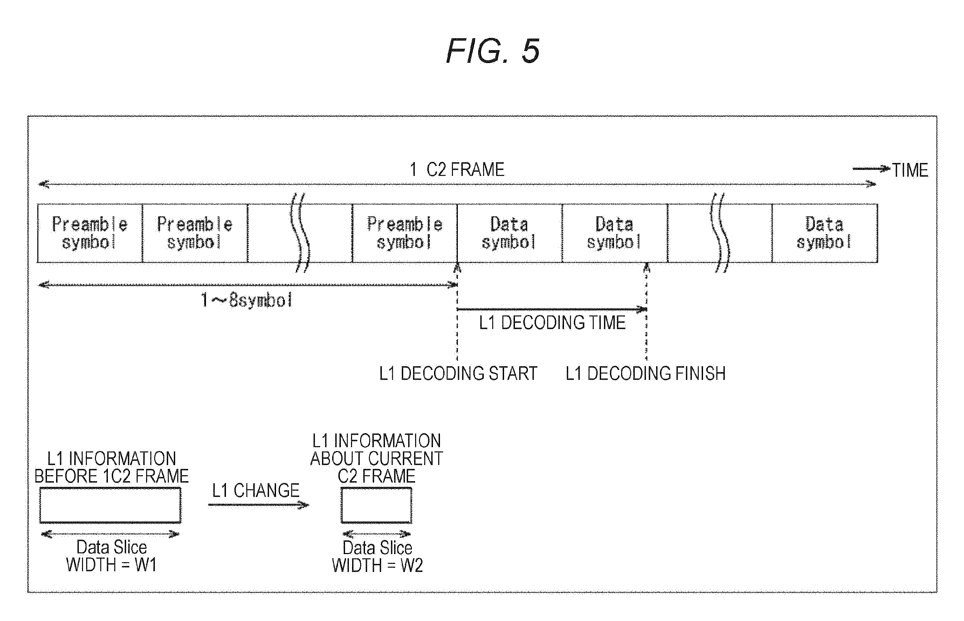

Fig. 4 is a figure illustrating an example of a decoding sequence of a reception apparatus according to an embodiment of the present technique. The horizontal direction of Fig. 4 denotes a time.
In the reception apparatus, as illustrated in Fig. 4, the Preamble Symbols are demodulated in accordance with its order, and the demodulation of the final Preamble Symbol is finished, decoding of the L1 information is started. A C2 frame includes one to eight Preamble Symbols and a predetermined number of Data Symbols, which are arranged in the order of transmission.
In parallel with decoding of the L1 information, writing of the main line data, which are obtained by demodulating the first Data Symbol subsequent to the Preamble Symbol, to the buffer is started. Writing of the main line data to the buffer is continued until writing of the main line data, which are obtained by demodulating the final Data Symbol in the C2 frame is finished.
When the decoding of the L1 information is finished, the decoding is performed as follows in parallel with writing of the main line data obtained by demodulating the Data Symbol into the buffer, the main line data written in the buffer are read in such an order that data written first are read first, and the decoding is performed on the basis of the L1 information which has been decoded. The buffer provided in the reception apparatus is an FIFO (First In First Out) type memory.
Reading and decoding of the main line data from the buffer is continued until decoding of the main line data, which are obtained by demodulating the final Data Symbol in the C2 frame written to the buffer is finished.
As described above, in the reception apparatus, the main line data which are output from the demodulation unit as a result of demodulation are held in a so-called waiting state in the buffer until the decoding of the L1 information is finished, and when the decoding of the L1 information is finished, the main line data are decoded in order.
Accordingly, the reception apparatus does not lose the main line data, and can start decoding of the main line data transmitted with the first Data Symbol included in the same C2 frame as the C2 frame used for obtaining the L1 information. It is not necessary for the Data Symbol of the C2 frame subsequent to the C2 frame used for obtaining the L1 information, and therefore, the decoding of the main line data can be started quickly.
In addition, the reception apparatus can seamlessly follow the change of the L1 information. As illustrated in Fig. 5, a case where the L1 information is changed in the current C2 frame will be considered. Suppose that the not-yet-changed L1 information has already been obtained from the C2 frame before the current C2 frame, and the decoding of the main line data of the C2 frame immediately before is done on the basis of the not-yet-changed L1 information.
The L1 information transmitted with the Preamble Symbols in a certain C2 frame is applied to the main line data transmitted with the Data Symbols in the same C2 frame. The main line data to which the changed L1 information is applied is main line data transmitted with the Data Symbols in the C2 frame of Fig. 5. In the example of Fig. 5, the band width of a desired Data Slice is a width W1 in the L1 information which is before the current C2 frame by one C2 frame (before the change), but it is a width W2 in the L1 information of the current C2 frame.
By storing the main line data to the buffer until the decoding of the L1 information is finished, and therefore, the reception apparatus uses the changed L1 information to start decoding of the main line data transmitted with the Data Symbols in the current C2 frame stored in the buffer. The changed L1 information can be applied to the main line data transmitted with the Data Symbols in the current C2 frame and the main line data subsequent thereto, and it is possible to seamlessly follow the change of the L1 information.
When the Data Symbols in the subsequent C2 frame is waited for as explained with reference to Fig. 3, the changed L1 information can be applied to the main line data in the C2 frame subsequent to the current C2 frame from which the changed L1 information is obtained. In this case, it is impossible to seamlessly follow the change of the L1 information.

<Configuration and operation of reception apparatus>

[Example of configuration of reception apparatus]

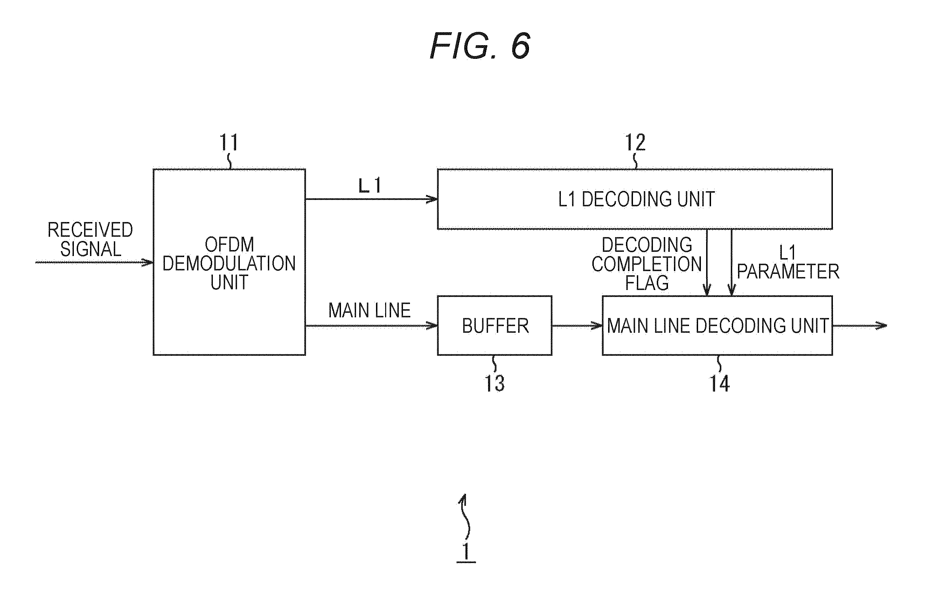

Fig. 6 is a block diagram illustrating an example of configuration of a reception apparatus according to an embodiment of the present technique.

The reception apparatus 1 of Fig. 6 is an apparatus capable of receiving an OFDM signal of DVB-C2. The reception apparatus 1 performs decoding of data as explained with reference to Fig. 4.

The reception apparatus 1 includes an OFDM demodulation unit 11, an L1 decoding unit 12, a buffer 13, and a main line decoding unit 14. The OFDM demodulation unit 11 receives, as a received signal, an IF signal which is obtained by applying frequency conversion to an RF signal in the Tuning Window received by an RF tuner, not shown.

The OFDM demodulation unit 11 performs quadrature demodulation on the received signal (OFDM signal). The OFDM demodulation unit 11 performs FFT calculation on a baseband signal of time domain representing each symbol such as Preamble Symbol and Data Symbol obtained by applying the quadrature demodulation. The OFDM demodulation unit 11 equalizes the baseband signal of the frequency domain obtained from the FFT calculation, and outputs the equalized signal. The OFDM demodulation unit 11 performs, as demodulation processing, quadrature demodulation, FFT calculation, equalization, and the like of the received signal.

The L1 information obtained by the demodulation processing for the Preamble Symbols is provided from the OFDM demodulation unit 11 to the L1 decoding unit 12, and the main line data obtained by the demodulation processing for the Data Symbols are provided from the OFDM demodulation unit 11 to the buffer 13.

When the L1 decoding unit 12 receives the L1 information from the OFDM demodulation unit 11, the L1 decoding unit 12 starts decoding the L1 information. The decoding of the L1 information is done on the basis of BCH code and LDPC code. When the decoding of the L1 information is finished, the L1 decoding unit 12 outputs information about the Data Slice included in the L1 information as well as the decoding finish flag to the main line decoding unit 14.

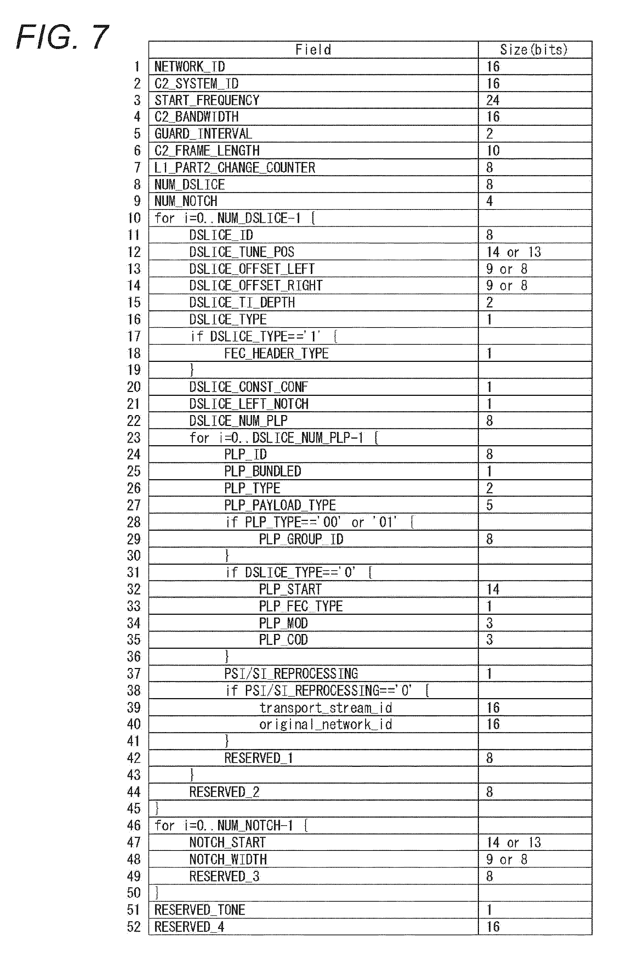

Fig. 7 is a figure illustrating parameters of L1 information. Main parameters will be explained.

START_FREQUENCY in the third line denotes a frequency serving as a start position of the C2 System. The start position is represented by absolute frequency with 0 Hz being the start point. C2_BANDWIDTH in the fourth line denotes a band width of the C2 System. C2_FRAME_LENGTH in the sixth line denotes the number of Data Symbols included in the C2 Frame. NUM_DSLICE in the eighth line denotes the number of Data Slices included in the C2 Frame. Each parameter from the tenth line to the forty fifth line is described for each Data Slice.

DSLICE_ID in the eleventh line denotes an ID of a Data Slice in the C2 system. DSLICE_TUNE_POS in the twelfth line denotes a position (central frequency) serving as a tuning point for receiving the Data Slice with respect to the frequency represented by START_FREQUENCY. DSLICE_OFFSET_LEFT in the thirteenth line denotes a frequency at the left end of the Data Slice with respect to the tuning point. DSLICE_OFFSET_RIGHT in the fourteenth line denotes a frequency at the right end of the Data Slice with respect to the tuning point. DSLICE_TI_DEPTH in the fifteenth line denotes Depth of time interleaving.

Back to the explanation about Fig. 6, the buffer 13 stores the main line data provided from the OFDM demodulation unit 11. Reading of the main line data stored in the buffer 13 is started when decoding of the L1 information is finished. The buffer 13 may be a volatile memory such as a RAM, or may be a non-volatile memory such as a flash memory.

When the decoding of the L1 information is finished, and the decoding finish flag is provided from the L1 decoding unit 12, the main line decoding unit 14 starts reading the main line data stored in the buffer 13. The main line decoding unit 14 decodes the main line data which are read from the buffer 13 on the basis of the parameters of the L1 information provided by the L1 decoding unit 12, and outputs the main line data obtained as a result of the decoding to a processing unit in a later stage such as an MPEG decoder. The decoding of the main line data by the main line decoding unit 14 is done on the basis of BCH code and LDPC code.

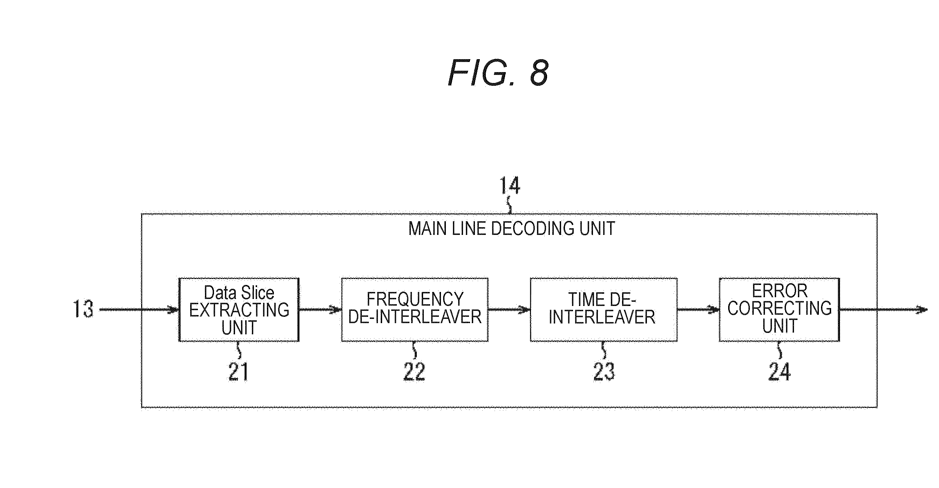

Fig. 8 is a block diagram illustrating an example of configuration of the main line decoding unit 14. The main line decoding unit 14 includes a Data Slice extracting unit 21, a frequency de-interleaver 22, a time de-interleaver 23, and an error correction unit 24.

Data Slice extracting unit 21 extracts a signal of a desired Data Slice on the basis of parameters of the L1 information provided from the L1 decoding unit 12.

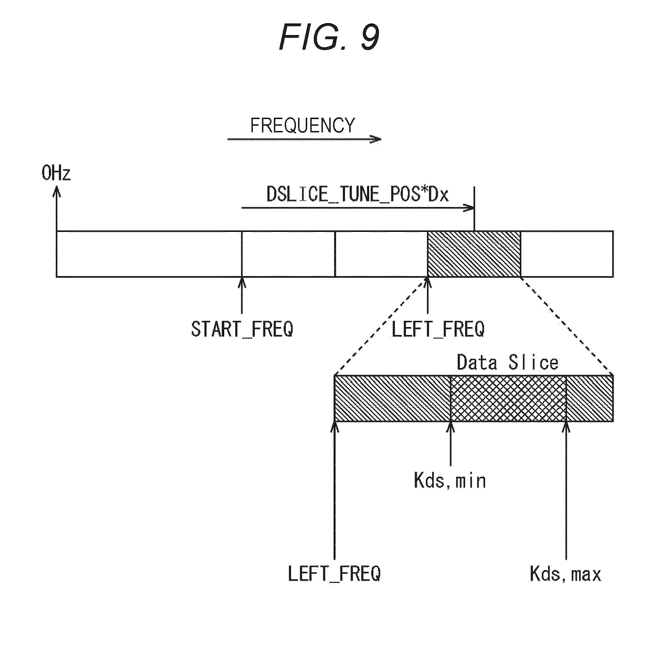

Fig. 9 is a figure illustrating an example of extraction of Data Slice by the Data Slice extracting unit 21. The horizontal direction of Fig. 9 denotes a frequency. When a band width indicated with lattice-like diagonal lines is defined as the band width of the desired Data Slice, the positions Kds, min at the left end of the band width of the desired Data Slice are represented by the following expression (1), and the positions Kds, max at the right end thereof are represented by the following expression (2). Dx denotes a parameter determined by a GI (guard interval) length. When GI interval is 1/64, Dx is 12, and when the GI interval is 1/128, Dx is 24.

$$Kds,min = (DSLICE\_TUNE\_POS + DSLICE\_OFFSET\_LEFT)*Dx +$$
$$START\_FREQUENCY \quad \cdots (1)$$

$$Kds,max = (DSLICE\_TUNE\_POS + DSLICE\_OFFSET\_RIGHT)*Dx +$$
$$START\_FREQUENCY - 1 \quad \cdots (2)$$

DSLICE _TUNE _POS, DSLICE _OFFSET_LEFT, DSLICE _OFFSET_RIGHT, START_FREQUENCY used for extraction of the Data Slice are parameters of the L1 information provided by the L1 decoding unit 12. The Data Slice extracting unit 21 outputs data of the extracted Data Slice to the frequency de-interleaver 22.

The frequency de-interleaver 22 de-interleaves, in the frequency direction, the data of the Data Slice provided by the Data Slice extracting unit 21, and outputs the data obtained by de-interleaving the data in the frequency direction to the time de-interleaver 23.

The time de-interleaver 23 de-interleaves, in the time direction, the data of the Data Slice provided by the frequency de-interleaver 22. The pattern of de-interleaving in the time direction is designated by DSLICE_TI_DEPTH provided by the L1 decoding unit 12. The time de-interleaver 23 outputs the data obtained by de-interleaving the data in the time direction to the error correction unit 24.

The error correction unit 24 corrects error of the data of the Data Slice provided by the time de-interleaver 23, and outputs the data of which error has been corrected.

As described above, the main line decoding unit 14 uses various kinds of parameters included in the L1 information to decode the main line data.

[Operation of reception apparatus]

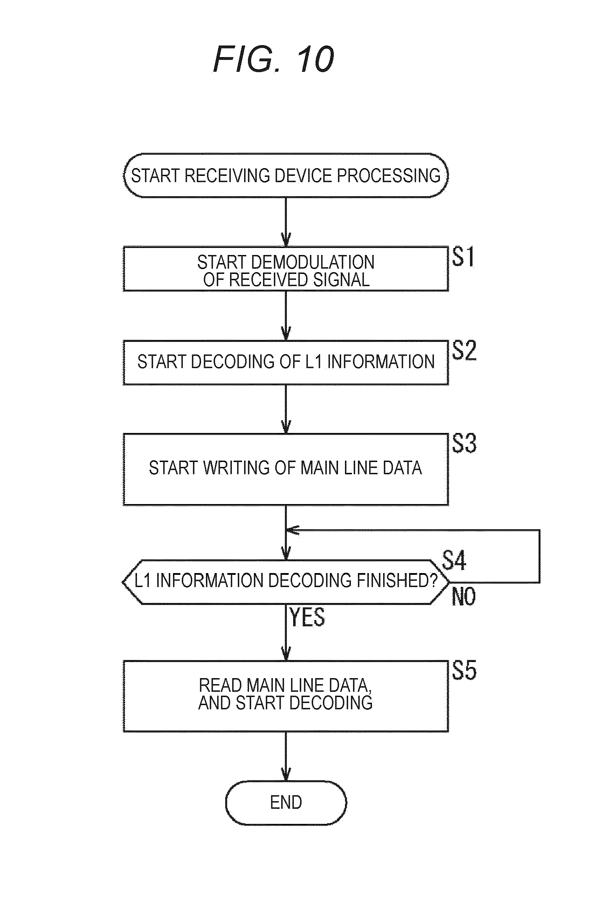

Now, with reference to a flowchart in Fig. 10, operation of the reception apparatus 1 having the above configuration will be explained.

The processing of Fig. 10 is started when the reception apparatus 1 is started and the start of reception of the DVB-C2 signal is commanded. The processing in each step is done as necessary in parallel with processing in another step or before or after processing in another step.

In step S1, the OFDM demodulation unit 11 starts demodulation of the received signal. The OFDM demodulation unit 11 outputs the L1 information obtained by the demodulation processing for the Preamble Symbol to the L1 decoding unit 12.

In step S2, when the L1 decoding unit 12 receives data obtained from the demodulation processing for the final Preamble Symbol, the L1 decoding unit 12 starts decoding of the L1 information.

In step S3, the OFDM demodulation unit 11 performs the demodulation processing on the Data Symbol which is received subsequent to the final Preamble Symbol, and starts writing the main line data to the buffer 13. Writing of the main line data to the buffer 13 is continued until writing of the data obtained from the demodulation processing for the final Data Symbol is finished.

In step S4, the L1 decoding unit 12 determines whether the decoding of the L1 information is finished or not, and waits until it determines that the decoding of the L1 information is finished. When the decoding of the L1 information is determined to be finished, the L1 decoding unit 12 outputs the decoding finish flag and the parameters of the L1 information to the main line decoding unit 14.

In step S5, when the main line decoding unit 14 receives the decoding finish flag and the L1 information parameter from the L1 decoding unit 12, the main line decoding unit 14 reads the main line data stored in the buffer 13, and starts decoding of the read main line data. Thereafter, the main line decoding unit 14 continues reading of the main line data and decoding of the read main line data are continued.

As a result of the above processing, the reception apparatus 1 can quickly start decoding of the main line data. Even when the L1 information is changed, the reception apparatus 1 can seamlessly follow the change.

<Modification>

When the decoding finish flag is output from the L1 decoding unit 12, the main line data are read from the buffer 13. Alternatively, the timing of reading of the main line data may be different as long as the main line data can be decoded using the L1 information decoded by the L1 decoding unit 12. For example, after a predetermined period of time passes since the decoding finish flag is provided from the L1 decoding unit 12, the main line data may be read from the buffer 13, and the main line data may be decoded.

[Example of configuration of reception system]

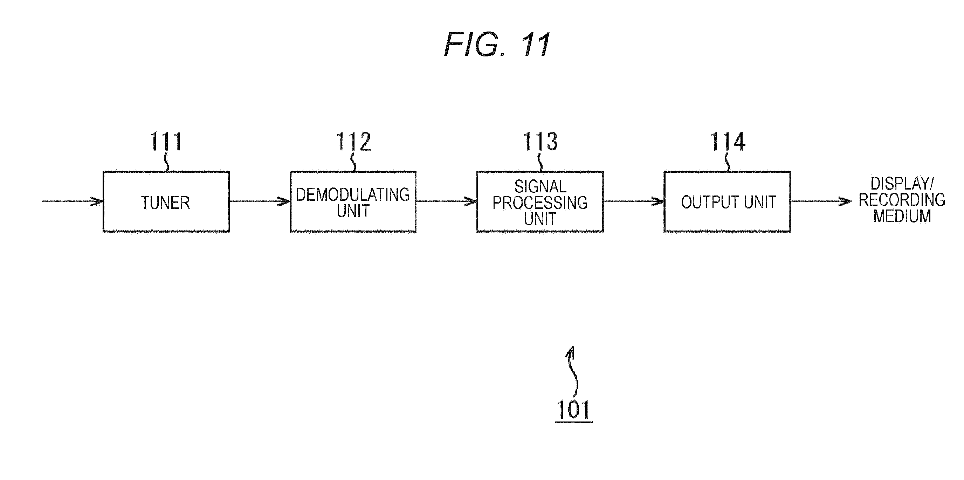

Fig. 11 is a block diagram illustrating an example of configuration of a reception system to which the reception apparatus 1 is applied.
The reception system 101 of Fig. 11 includes a tuner 111, a demodulation unit 112, a signal processing unit 113, and an output unit 114.
The tuner 111 receives a signal transmitted via a transmission path such as terrestrial digital broadcasting, satellite digital broadcasting, CATV network, and the Internet, and outputs the signals to the demodulation unit 112.
The demodulation unit 112 performs transmission path decoding processing including demodulation processing and error correction processing on the signal provided by the tuner 111, and outputs the data obtained by the transmission path decoding processing to the signal processing unit 113. The configuration of Fig. 6 includes the demodulation unit 112.
The signal processing unit 113 performs, as necessary, signal processing such as de-compressing processing and de-scrambling processing on the data obtained by the transmission path decoding processing, and obtains data to be transmitted.
The de-compressing processing by the signal processing unit 113 is performed when a transmission side compresses transmission target data such as images and audio using a predetermined method such as MPEG. The de-scrambling processing is performed when a transmission side scrambles transmission target data. The signal processing unit 113 outputs the transmission target data obtained by applying the signal processing as necessary to the output unit 114.
When an image based on the data provided from the signal processing unit 113 is displayed, the output unit 114 performs processing such as D/A conversion on the data provided by the signal processing unit 113. The output unit 114 outputs an image signal obtained by performing processing such as D/A conversion to a display provided in the reception system 101 or a display provided outside of the reception system 101, so that the image is displayed.
When the data provided from the signal processing unit 113 are recorded to a recording medium, the output unit 114 outputs the data provided from the signal processing unit 113 to a recording medium provided in the reception system 101 or a recording medium provided outside of the reception system 101, so that the data are recorded. The recording medium is constituted by a hard disk, a flash memory, an optical disk, and the like. The external recording medium may be not only a recording medium attached externally to the reception system 101 but also a recording medium connected via a network.
The reception system 101 having the above configuration may be constituted by hardware such as an IC (Integrated Circuit) chip or may be constituted by components such as a board made by arranging multiple IC chips or an independent apparatus including the components.
Each of the tuner 111, the demodulation unit 112, the signal processing unit 113, and the output unit 114 may be constituted as an independent hardware or software module. A combination of two or more of the tuner 111, the demodulation unit 112, the signal processing unit 113, and the output unit 114 may be constituted as an independent hardware or software module. For example, the tuner 111 and the demodulation unit 112 may be constituted as a piece of hardware and the like, and the signal processing unit 113 and the output unit 114 may be constituted as a piece of hardware and the like.
For example, the reception system 101 may be applied to a television receiver for receiving television broadcast as digital broadcast, a radio receiver for receiving radio broadcast, and a recorder apparatus for recording television broadcast.

[Configuration example of computer]

A series of processing explained above may be executed by hardware or may be executed by software. When the series of processing is executed by software, for example, programs constituting the software are installed from a program recording medium to a computer incorporated into dedicated hardware or a general-purpose computer.

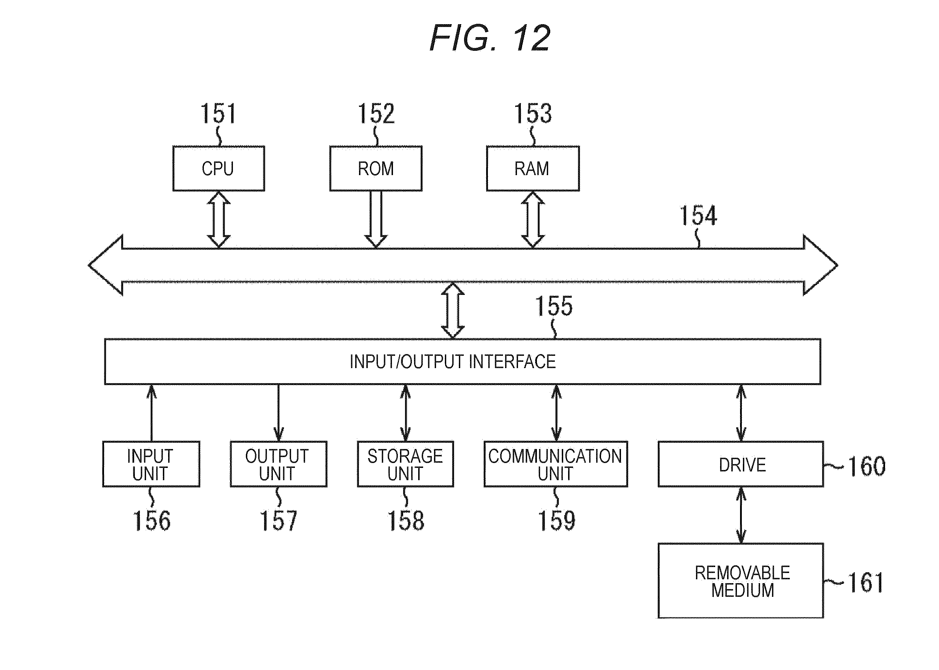

Fig. 12 is a block diagram illustrating a configuration example of hardware of a computer executing the above series of processing using programs.
A CPU (Central Processing Unit) 151, a ROM (Read Only Memory) 152, and a RAM (Random Access Memory) 153 are connected to each other via a bus 154.
The bus 154 is further connected to an input/output interface 155. The input/output interface 155 is connected to an input unit 156 made of a keyboard, a mouse, and the like, and an output unit 157 made of a display, a speaker, and the like. The input/output interface 155 is connected to a storage unit 158 made of a hard disk, a non-volatile memory, and the like, a communication unit 159 made of a network interface and the like, and a drive 160 for driving removable medium 161.

In the computer configured as described above, for example, the CPU 151 loads the program stored in the storage unit 158 via the input/output interface 155 and the bus 154 to the RAM 153, and executes the program, whereby the above series of processing is performed.

For example, the program executed by the CPU 151 is recorded to the removable medium 161, or provided via a wired or wireless transmission medium such as a local area network, the Internet, and digital broadcast, and installed to the storage unit 158.

The program executed by the computer may be a program with which processing in performed in time sequence according to the order explained in this specification, or may be a program with which processing is performed in parallel or with necessary timing, e.g., upon call.

The embodiment of the present technique is not limited to the above embodiment, and may be changed in various manners as long as it is within the gist of the present technique.

[Modification]

The present technique may be configured as follows.

(1) A reception apparatus including:

a demodulation unit configured to demodulate a modulated signal used to transmit transmission control information about data and the data to be transmitted;

a first decoding unit configured to decode the transmission control information obtained by demodulation performed with the demodulation unit;

a storage unit configured to store the data obtained by demodulation performed with the demodulation unit; and

a second decoding unit configured to decode the data stored in the storage unit on the basis of the transmission control information decoded by the first decoding unit.

(2) The reception apparatus as described in (1),

wherein the modulated signal includes a signal used for transmitting the transmission control information and a signal used for transmitting the data, which are arranged in an order of transmission, and

the storage unit stores the data obtained while the transmission control information is being decoded.

(3) The reception apparatus as described in any one of (1) to (2),

wherein when the first decoding unit finishes decoding of the transmission control information, the second decoding unit starts decoding the data.

(4) The reception apparatus as described in any one of (1) to (3),

wherein the modulated signal is an OFDM signal of DVB-C2,

the transmission control information is L1 information transmitted with a Preamble Symbol, and

the data are data transmitted with a Data Symbol.

(5) A reception method including:

demodulating a modulated signal used to transmit transmission control information about data and the data to be transmitted;

decoding the transmission control information obtained by demodulation;

storing the data obtained by demodulation; and

decoding the stored data on the basis of the transmission control information decoded.

(6) A program for causing a computer to execute:

demodulating a modulated signal used to transmit transmission control information about data and the data to be transmitted;

decoding the transmission control information obtained by demodulation;

storing the data obtained by demodulation; and

decoding the stored data on the basis of the transmission control information decoded.

(7) A reception system including:

a reception unit configured to receive a modulated signal transmitted via a transmission path;

a demodulation unit configured to perform demodulation processing of the modulated signal received by the reception unit;

a signal processing unit configured to perform signal processing on data demodulated by the demodulation unit to obtain data to be transmitted; and

an output unit configured to output the data, which are to be transmitted, obtained by the signal processing unit, wherein the demodulation unit includes: a signal demodulation unit configured to demodulate the modulated signal used to transmit transmission control information about the data, which are to be transmitted, and the data to be transmitted;

a first decoding unit configured to decode the transmission control information obtained by demodulation performed with the signal demodulation unit;

a storage unit configured to store the data obtained by demodulation performed with the signal demodulation unit; and

a second decoding unit configured to decode the data stored in the storage unit on the basis of the transmission control information decoded by the first decoding unit.

REFERENCE SIGNS LIST

1 reception apparatus, 11 OFDM demodulation unit, 12 L1 decoding unit, 13 buffer, 14 main line decoding unit.

**Claims**

1. A reception apparatus comprising:

a demodulation unit configured to demodulate a modulated signal used to transmit transmission control information about data and the data to be transmitted;

a first decoding unit configured to decode the transmission control information obtained by demodulation performed with the demodulation unit;

a storage unit configured to store the data obtained by demodulation performed with the demodulation unit; and

a second decoding unit configured to decode the data stored in the storage unit on the basis of the transmission control information decoded by the first decoding unit.

2. The reception apparatus according to claim 1,

wherein the modulated signal includes a signal used for transmitting the transmission control information and a signal used for transmitting the data, which are arranged in an order of transmission, and

the storage unit stores the data obtained while the transmission control information is being decoded.

3. The reception apparatus according to claim 1,

wherein when the first decoding unit finishes decoding of the transmission control information, the second decoding unit starts decoding the data.

4. The reception apparatus according to claim 1,

wherein the modulated signal is an OFDM signal of DVB-C2,

the transmission control information is L1 information transmitted with a Preamble Symbol, and

the data are data transmitted with a Data Symbol.

5. A reception method comprising:

demodulating a modulated signal used to transmit transmission control information about data and the data to be transmitted;

decoding the transmission control information obtained by demodulation;

storing the data obtained by demodulation; and

decoding the stored data on the basis of the transmission control information decoded.

6. A program for causing a computer to execute:

demodulating a modulated signal used to transmit transmission control information about data and the data to be transmitted;

decoding the transmission control information obtained by demodulation;

storing the data obtained by demodulation; and

decoding the stored data on the basis of the transmission control information decoded.

7. A reception system comprising:

a reception unit configured to receive a modulated signal transmitted via a transmission path;

a demodulation unit configured to perform demodulation processing of the modulated signal received by the reception unit;

a signal processing unit configured to perform signal processing on data demodulated by the demodulation unit to obtain data to be transmitted; and

an output unit configured to output the data, which are to be transmitted, obtained by the signal processing unit, wherein the demodulation unit includes:

a signal demodulation unit configured to demodulate the modulated signal used to transmit transmission control information about the data, which are to be transmitted, and the data to be transmitted;

a first decoding unit configured to decode the transmission control information obtained by demodulation performed with the signal demodulation unit;

a storage unit configured to store the data obtained by demodulation performed with the signal demodulation unit; and

a second decoding unit configured to decode the data stored in the storage unit on the basis of the transmission control information decoded by the first decoding unit.

FIG. 1

FIG. 2

*FIG. 3*

1 C2 FRAME

1 C2 FRAME

TIME

| Preamble symbol | Preamble symbol | | Preamble symbol | Data symbol | Data symbol | | Data symbol | Preamble symbol | Preamble symbol | | Preamble symbol | Data symbol | Data symbol | | Data symbol |

1~8symbol

1~8symbol

L1 DECODING TIME

L1 DECODING START

L1 DECODING FINISH

# FIG. 4

EP 2 693 670 A1

## FIG. 5

1 C2 FRAME → TIME

| Preamble symbol | Preamble symbol | )) | Preamble symbol | Data symbol | Data symbol | )) | Data symbol |

1~8symbol

L1 DECODING TIME

L1 DECODING START    L1 DECODING FINISH

L1 INFORMATION
BEFORE 1C2 FRAME

L1 CHANGE →

L1 INFORMATION
ABOUT CURRENT
C2 FRAME

Data Slice
WIDTH = W1

Data Slice
WIDTH = W2

EP 2 693 670 A1

## FIG. 6

EP 2 693 670 A1

## FIG. 7

| Field | Size(bits) |
|---|---|
| NETWORK_ID | 16 |
| C2_SYSTEM_ID | 16 |
| START_FREQUENCY | 24 |
| C2_BANDWIDTH | 16 |
| GUARD_INTERVAL | 2 |
| C2_FRAME_LENGTH | 10 |
| L1_PART2_CHANGE_COUNTER | 8 |
| NUM_DSLICE | 8 |
| NUM_NOTCH | 4 |
| for i=0..NUM_DSLICE-1 { | |
|     DSLICE_ID | 8 |
|     DSLICE_TUNE_POS | 14 or 13 |
|     DSLICE_OFFSET_LEFT | 9 or 8 |
|     DSLICE_OFFSET_RIGHT | 9 or 8 |
|     DSLICE_TI_DEPTH | 2 |
|     DSLICE_TYPE | 1 |
|     if DSLICE_TYPE=='1' { | |
|         FEC_HEADER_TYPE | 1 |
|     } | |
|     DSLICE_CONST_CONF | 1 |
|     DSLICE_LEFT_NOTCH | 1 |
|     DSLICE_NUM_PLP | 8 |
|     for i=0..DSLICE_NUM_PLP-1 { | |
|         PLP_ID | 8 |
|         PLP_BUNDLED | 1 |
|         PLP_TYPE | 2 |
|         PLP_PAYLOAD_TYPE | 5 |
|         if PLP_TYPE=='00' or '01' { | |
|             PLP_GROUP_ID | 8 |
|         } | |
|         if DSLICE_TYPE=='0' { | |
|             PLP_START | 14 |
|             PLP_FEC_TYPE | 1 |
|             PLP_MOD | 3 |
|             PLP_COD | 3 |
|         } | |
|         PSI/SI_REPROCESSING | 1 |
|         if PSI/SI_REPROCESSING=='0' { | |
|             transport_stream_id | 16 |
|             original_network_id | 16 |
|         } | |
|         RESERVED_1 | 8 |
|     } | |
|     RESERVED_2 | 8 |
| } | |
| for i=0..NUM_NOTCH-1 { | |
|     NOTCH_START | 14 or 13 |
|     NOTCH_WIDTH | 9 or 8 |
|     RESERVED_3 | 8 |
| } | |
| RESERVED_TONE | 1 |
| RESERVED_4 | 16 |

FIG. 8

MAIN LINE DECODING UNIT  14

13 →

| Data Slice EXTRACTING UNIT | → | FREQUENCY DE-INTERLEAVER | → | TIME DE-INTERLEAVER | → | ERROR CORRECTING UNIT | → |
| 21 | | 22 | | 23 | | 24 | |

# FIG. 9

FREQUENCY

0Hz

DSLICE_TUNE_POS*Dx

START_FREQ          LEFT_FREQ

Data Slice

Kds,min

LEFT_FREQ          Kds,max

# FIG. 10

```
┌──────────────────────────────────────┐
│   START RECEIVING DEVICE PROCESSING   │
└──────────────────────────────────────┘
                   │
                   ▼
┌──────────────────────────────────┐
│        START DEMODULATION         │  S1
│        OF RECEIVED SIGNAL         │
└──────────────────────────────────┘
                   │
                   ▼
┌──────────────────────────────────┐
│   START DECODING OF L1 INFORMATION │  S2
└──────────────────────────────────┘
                   │
                   ▼
┌──────────────────────────────────┐
│   START WRITING OF MAIN LINE DATA │  S3
└──────────────────────────────────┘
                   │
                   ▼
      ◄ L1 INFORMATION DECODING FINISHED? ►  S4
                   │                    NO
                  YES
                   │
                   ▼
┌──────────────────────────────────┐
│        READ MAIN LINE DATA,       │  S5
│        AND START DECODING         │
└──────────────────────────────────┘
                   │
                   ▼
              (   END   )
```

## FIG. 11

111 TUNER → 112 DEMODULATING UNIT → 113 SIGNAL PROCESSING UNIT → 114 OUTPUT UNIT → DISPLAY/ RECORDING MEDIUM

101

EP 2 693 670 A1

# FIG. 12

```
        151              152              153
    ┌─────────┐     ┌─────────┐     ┌─────────┐
    │   CPU   │     │   ROM   │     │   RAM   │
    └─────────┘     └─────────┘     └─────────┘
```

INPUT/OUTPUT INTERFACE 155

| INPUT UNIT | OUTPUT UNIT | STORAGE UNIT | COMMUNICATION UNIT | DRIVE |
| 156 | 157 | 158 | 159 | 160 |

REMOVABLE MEDIUM ~161

154

EP 2 693 670 A1

| **INTERNATIONAL SEARCH REPORT** | International application No. |
|---|---|
| | PCT/JP2012/057529 |

| A. CLASSIFICATION OF SUBJECT MATTER |
|---|
| *H04J11/00*(2006.01)i, *H04N7/173*(2011.01)i |
| According to International Patent Classification (IPC) or to both national classification and IPC |

| B. FIELDS SEARCHED |
|---|
| Minimum documentation searched (classification system followed by classification symbols) |
| H04J11/00, H04N7/173 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
IEEE Xplore, CiNii

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2001-136150 A  (Panasonic Corp.),<br>18 May 2001 (18.05.2001),<br>paragraphs [0006] to [0012]; fig. 12<br>& EP 1079576 A3      & EP 1079576 A2 | 1-3,5-7<br>4 |
| Y<br>A | Frame structure channel coding and modulation<br>for a second generation digital transmission<br>system for cable systems (DVB-C2), 2010.06 | 4<br>1-3,5-7 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 May, 2012 (21.05.12) | 29 May, 2012 (29.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)